# EUROPÄISCHE PATENTSCHRIFT

(11) **EP 1 601 886 B1**
(45) Veröffentlichungstag und Bekanntmachung des Hinweises auf die Patenterteilung: **16.08.2006**
(21) Anmeldenummer: 04713859.9
(22) Anmeldetag: 24.02.2004
(51) Int. Cl.: F16D 41/07

(54) **FREILAUFKUPPLUNG**
FREE ENGINE CLUTCH
ACCOUPLEMENT ROUE LIBRE

(30) Priorität: 08.03.2003 DE 10310225
(43) Veröffentlichungstag der Anmeldung: 07.12.2005
(73) Patentinhaber: Schaeffler KG, 91074 Herzogenaurach (DE)
(72) Erfinder: STRAUB, Frank, 97618 Hohenroth (DE); HALAMA, Martin, 91085 Weisendorf (DE); ALTMANN, Frieder, 96178 Pommersfelden (DE)
(86) Internationale Anmeldenummer: PCT/EP2004/001781
(87) Internationale Veröffentlichungsnummer: WO 2004/079220

(56) Entgegenhaltungen:
- US-A- 4 875 564
- US-A- 5 335 761
- PATENT ABSTRACTS OF JAPAN Bd. 1998, Nr. 02, 30. Januar 1998 (1998-01-30) & JP 9 264342 A (NTN CORP), 7. Oktober 1997 (1997-10-07)
- PATENT ABSTRACTS OF JAPAN Bd. 0180, Nr. 90 (M-1560), 15. Februar 1994 (1994-02-15) & JP 5 296266 A (NTN CORP), 9. November 1993 (1993-11-09)

## Beschreibung

### Gebiet der Erfindung

Die Erfindung betrifft eine Freilaufkupplung mit Klemmkörpern, welche zwischen einem kreiszylindrischen Innenring und einem dazu konzentrischen Außenring in Umfangsrichtung hintereinander angeordnet, in Taschen eines Käfigs geführt und von einer an dem Käfig radial anliegenden Bandfeder mit Federzungen beaufschlagt sind.

### Hintergrund der Erfindung

Eine Freilaufkupplung dieser Art ist aus der Druckschrift DE 1 142 254 B bekannt. Die dort verwendete Bandfeder ist ein ausgestanztes, ringförmig gebogenes, federnd nachgiebiges Blech, an welchem die Federzungen über U-förmig gebogene Querfalten mit Querstegen verbunden sind. Zusätzlich zu der Querfalte jeder Federzunge sind an den durch die Querstege miteinander verbundenen beiden Längsstegen Querfalten ausgebildet, welche das Federungsverhalten dieser Bandfeder begünstigen, ihr aber mit drei Querfalten in jedem Federzungenbereich eine konstruktiv aufwendige Form geben.

Aus der Druckschrift US 5,335,761 ist eine solche Freilaufkupplung bekannt, bei welcher zusätzlich jeweils innerhalb einer Tasche zur Aufnahme eines Klemmkörpers eine Begrenzungswand ausgebildet ist, welche eine Anlage des Klemmkörpers an dem Käfig ermöglicht. Und zwar bewirkt dort der Klemmkörper bei seiner Verschwenkung eine Auslenkung der Federzunge bis zu deren flächenhafter Anlage an dem Käfig, wobei dann der Klemmkörper an der Federzunge flächenhaft anliegt und sich über diese an dem Käfig abstützt.

### Zusammenfassung der Erfindung

Der Erfindung liegt die Aufgabe zugrunde, eine Freilaufkupplung mit einem günstig herzustellenden Käfig und einer Bandfeder einfacher Geometrie zu schaffen, bei welcher die Klemmkörper und die Bandfeder eine definierte, formschlüssige Endlage zum Käfig einnehmen. Dabei soll eine dauerfeste Auslegung durch begrenzte Federwege erreicht und eine Übertragung der von dem jeweiligen Klemmkörper auf den Käfig aufgebrachten radialen Kraft von dem Käfig auf den Außenring ermöglicht werden.

Diese Aufgabe wird erfindungsgemäß dadurch gelöst, dass an dem Käfig jeweils in dem die Begrenzungswand aufweisenden radialen Bereich eine Verstärkungsleiste einstückig an der äußeren Käfigoberfläche angeformt ist. Auf diese Weise erfolgt eine Verstärkung des Käfigs genau an der Stelle, an der durch die Abstützung des Klemmkörpers am Käfig eine Radialkraft nach außen wirkt. Wenn gleichzeitig auch die Federzungen am Käfig anschlagen, ist die Freilaufkupplung für höchste Drehzahlen einsetzbar. Für diese flächenhafte Anlage der Federzunge an der Begrenzungswand können jeweils die Begrenzungswand, die Federzunge und die Klemmkörperaußenkontur so ausgebildet sein, dass die Fliehkraft des Klemmkörpers rein radial durch den Käfig in den Außenring geleitet wird.

Bei der erfindungsgemäßen Freilaufkupplung kann die Käfigtasche den Weg des Klemmkörpers und der Federzunge begrenzen, was sich günstig auf die Federlebensdauer auswirkt. Die Begrenzung kann als Radius oder Fase am Käfiginnendurchmesser ausgestaltet sein. Durch eine genaue Führung der Klemmkörper im Käfig und in der Bandfeder wird die Vibrationsempfindlichkeit der Freilaufkupplung verringert.

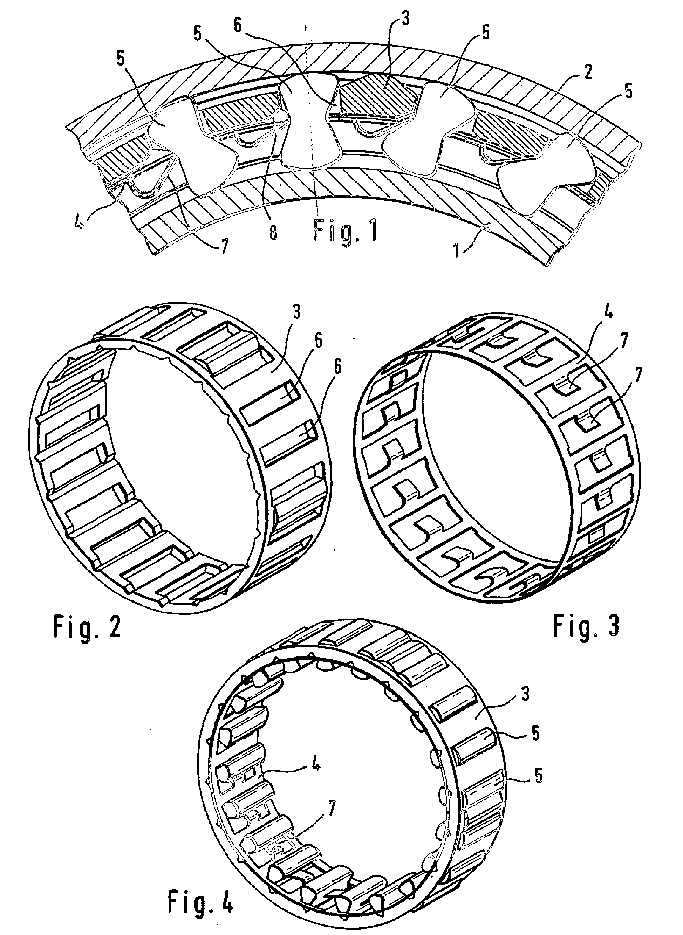

Der Käfig ist einfach aufgebaut. Er kann ohne Hinterschneidungen ausgeführt sein. In Figur 2 der Zeichnung sind beidseitig am Käfig Hochstellungen dargestellt, so dass der Käfig ein U-Profil aufweist. Die Hochstellungen dienen lediglich der Aufnahme von Gleitscheiben. Diese können einfach auf den Käfig aufgesteckt und dort mittels eines Preßsitzes gehalten werden. Oder der Käfig ist beidseitig mit einer Ringnut versehen, in welche die Gleitscheiben eingeklipst werden können.

Bei der Bandfeder handelt es sich um ein Federband mit einfachen Ausstanzungen oder mit einfachen Ausschneidungen nach einem Laser-Verfahren. Die Anfederung der Klemmkörper erfolgt aber anders als bei der vorbekannten Ausführung nach der Druckschrift DE 1 142 254 B, da die jeweilige Federzunge von dem Klemmkörper etwa radial nach außen gegen den Käfig angefedert wird und die Bandfeder keine Biegemomente aufweist. Die Federzungen sind im Lieferzustand der Baueinheit, bestehend aus Käfig, Bandfeder und Klemmkörpern, praktisch ohne Vorspannung. Nur zur Halterung der Klemmkörper können sie geringfügig vorgespannt sein. Eine nennenswerte Vorspannung wird erst beim Einbau der Baueinheit zwischen den Außenring und den Innenring der Freilaufkupplung aufgebracht.

Sobald ein Klemmkörper jeweils zu klemmen beginnt, wird die mit ihm zusammenwirkende Federzunge nach und nach entspannt und somit entlastet. Dies geschieht infolge der Gestalt des Klemmkörpers und dadurch, dass sich die Bandfeder unabhängig vom Käfig in Umfangsrichtung bewegen kann. Der Klemmkörper wird dann allein durch die Klemmkraft zwischen dem Innenring und dem Außenring gehalten, was eine Optimierung der Lebensdauer der Bandfeder zur Folge hat.

Das Federungsverhalten kann durch die Federbandstärke sowie die Anzahl, die Breite und die Länge der Federzungen abgestimmt werden, außerdem durch die Anlagekontur am Käfig. Die Bandfeder liegt am Innendurchmesser des Käfigs an und kann sich unabhängig vom Käfig in Umfangsrichtung drehen. Die Stoßenden des Federbandes können sich Ciberlappend oder aneinander stoßend punktgeschweißt sein oder das Federband wird nur rolliert, ohne die Stoßenden auf irgendeine Art zu verbinden. Ein Beschneideabriss sollte zum Innendurchmesser zeigen, damit die Bandfeder sich bei Bewegung in Umfangsrichtung nicht am Käfig verhakt. Axial wird sie von den Klemmkörpern gehalten.

Die Begrenzungswand kann eine von der inneren Oberfläche des Käfigs ausgehende Fase oder ein von der inneren Oberfläche des Käfigs ausgehender konvex gewölbter Flächenabschnitt sein. Sie kann jeweils innerhalb einer von der Tasche ausgehenden Freistellung angeordnet sein, deren Axialmaß der axialen Länge der Federzunge entspricht. Auf diese Weise benötigt die Federzunge nicht unbedingt eine Biegegeometrie. Die Berührungsfläche zwischen Begrenzungswand und Klemmkörper hat idealerweise Formschluß.

Das Stahlband für die Bandfeder kann, statt ausgestanzt zu werden, optional auch nach einem Laserverfahren ausgeschnitten werden. Dadurch ergibt sich der Vorteil einer gleichmäßigen Schnittkantenqualität. Der Verschleiß eines Schnittwerkzeugs, welcher bisher am Werkstück Mikrorisse verursacht hat, kann sich beim Schneiden nach dem Laserverfahren nicht auswirken. Zusätzlich zu diesem Vorteil besteht ein weiterer darin, dass sämtliche Feder-Baugrößen in derselben Anlage gefertigt werden können.

### Kurze Beschreibung der Zeichnung

Ausführungsbeispiele der Erfindung sind in der Zeichnung dargestellt und werden im Folgenden näher beschrieben. Es zeigen:
- Figur 1: einen Teil-Querschnitt durch eine Freilaufkupplung in einer ersten Ausführungsform;
- Figur 2: einen Käfig der Freilaufkupplung in perspektivischer Ansicht;
- Figur 3: eine Bandfeder der Freilaufkupplung in perspektivischer Ansicht;
- Figur 4: eine aus dem Käfig, der eingesetzten Bandfeder und darin montierten Klemmkörpern bestehende Baueinheit für die Freilaufkupplung in perspektivischer Ansicht;
- Figur 5: eine gegenüber Figur 1 abgewandelte Ausführungsform der Freilaufkupplung;
- Figur 6: eine weitere gegenüber Figur 1 abgewandelte Ausführungsform der Freilaufkupplung;
- Figur 7: eine dritte gegenüber Figur 1 abgewandelte Ausführungsform der Freilaufkupplung, bei welcher sich die Klemmkörper nicht über Federzungen, sondern unmittelbar am Käfig abstützen, in einem Ausschnitt mit drei in unterschiedlichen Betriebsstellungen dargestellten Klemmkörpern;
- Figur 8: eine Bandfeder in perspektivischer Ansicht für eine Freilaufkupplung gemäß Figur 7;
- Figur 9: einen Käfig in perspektivischer Ansicht für eine Freilaufkupplung gemäß Figur 7;
- Figur 10: einen weiteren Käfig in perspektivischer Ansicht für eine Freilaufkupplung gemäß Figur 7.

### Ausführliche Beschreibung der Zeichnung

Eine in den Figuren 1 bis 4 dargestellte Freilaufkupplung besteht aus einem kreiszylindrischen Innenring 1, einem den Innenring 1 in einem Abstand konzentrisch umgebenden Außenring 2 und einer in dem Abstand angeordneten Baueinheit mit einem Käfig 3, einer Bandfeder 4 und mehreren Klemmkörpern 5. In dem Käfig 3 sind in Umfangsrichtung in gleichen Abständen hintereinander durchgehende Taschen 6 zur Aufnahme der Klemmkörper 5 eingearbeitet.

Die Bandfeder 4 ist ringförmig ausgebildet und aus einem ausgestanzten Stahlband entstanden. Entsprechend den Taschen 6 des Käfigs 3 weist sie in Umfangsrichtung in Abständen hintereinander angeordnete Ausstanzungen auf, wobei in jeder Ausstanzung eine Federzunge 7 angeordnet ist, welche vom Stanzvorgang ausgenommen wurde. Die Bandfeder 4 ist so dimensioniert, dass sie axial in den Käfig 3 eingesetzt werden kann und an der inneren Oberfläche des Käfigs 3 anliegt. Dabei ragen die Federzungen 7 der Bandfeder 4 in die Bereiche der Taschen 6 des Käfigs 3 hinein.

Die Klemmkörper 5 Icönnen nun von außen radial in die Taschen 6 des Käfigs 3 und in die Ausstanzungen der Bandfeder 4 eingesteckt werden, wonach sie in Umfangsrichtung des Käfigs 3 an einer Seite von den Federzungen 7 und an der anderen Seite von Stegen der Bandfeder 4 gehalten sind. Erfindungsgemäß ist nun jeweils innerhalb einer der Taschen 6 zur Aufnahme eines Klemmkörpers 5 eine Begrenzungswand 8 in Form einer Fase ausgebildet, welche eine flächenhafte Anlage der jeweiligen Federzunge 7 an dem Käfig 3 ermöglicht.

Die Klemmkörper 5 sind in Figur 1 in vier unterschiedlichen, im Betrieb aufeinanderfolgenden Stellungen dargestellt. Der Klemmkörper 5 links außen befindet sich in der Stellung mit der maximalen Klemmwirkung zwischen dem Innenring 1 und dem Außenring 2, während der Klemmkörper 5 rechts außen sich in der abgehobenen Stellung befindet und die benachbarte Federzunge 7 der Bandfeder 4 an der Begrenzungswand 8 hält.

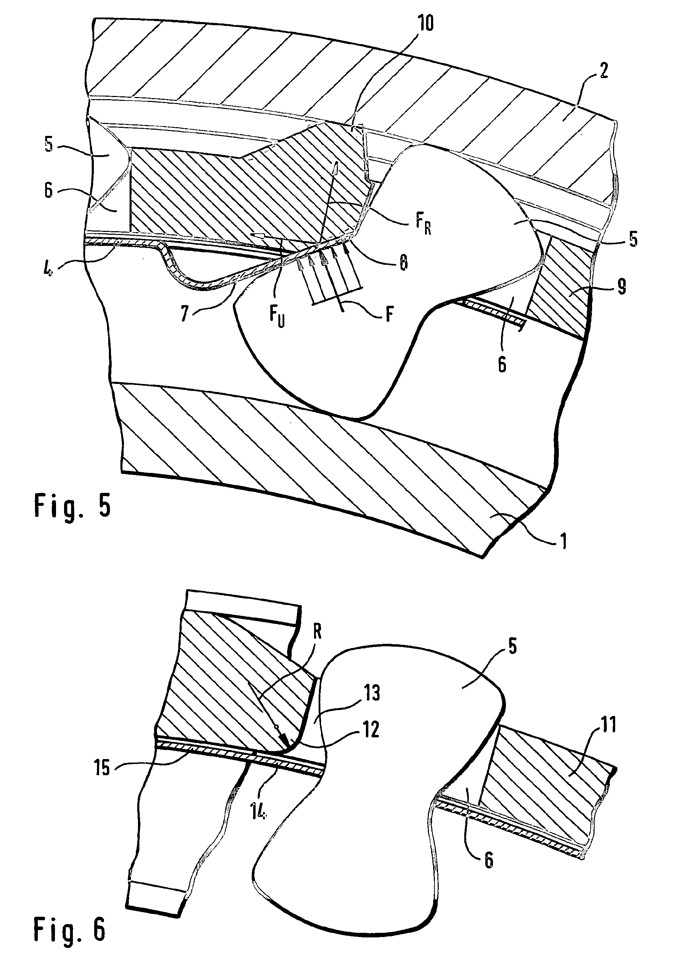

Die in Figur 5 dargestellte Ausführungsform der Freilaufkupplung weist einen Käfig 9 auf, an welchem jeweils in dem die Begrenzungswand 8 enthaltenden radialen Bereich eine Verstärkungsleiste 10 an der äußeren Käfigoberfläche einstückig angeformt ist. Sie ermöglicht die Übertragung der Radialkomponente F_{R} der von dem Klemmkörper 5 auf den Käfig 9 aufgebrachten Kraft F unmittelbar auf den Außenring 2, da die als Fase ausgebildete Begrenzungswand 8 eine solche Neigung aufweist, dass an ihr die Kraft F in eine Umfangskomponente F_{U} und eine Radialkomponente F_{R} aufgeteilt wird.

In Figur 6 ist eine Ausführungsform der Freilaufkupplung dargestellt, deren Käfig 11 innerhalb der Tasche 6 jeweils eine Begrenzungswand 12 in der Form eines von der inneren Oberfläche des Käfigs 11 ausgehenden, konvex gewölbten Flächenabschnitts aufweist. Dieser ist durch den Radius R gekennzeichnet und begrenzt eine Freistellung 13, die in dem Käfig 11 zu der Tasche 6 hin geöffnet ist. Die Federzunge 14 benötigt hier nicht eine Biegegeometrie, sondern verläuft in tangentialer Richtung der Bandfeder 15. Bei der Verschwenkung des Klemmkörpers 5 kann sich die Federzunge 14 innerhalb der Freistellung 13 an der konvex geformten Begrenzungswand 12 anlegen.

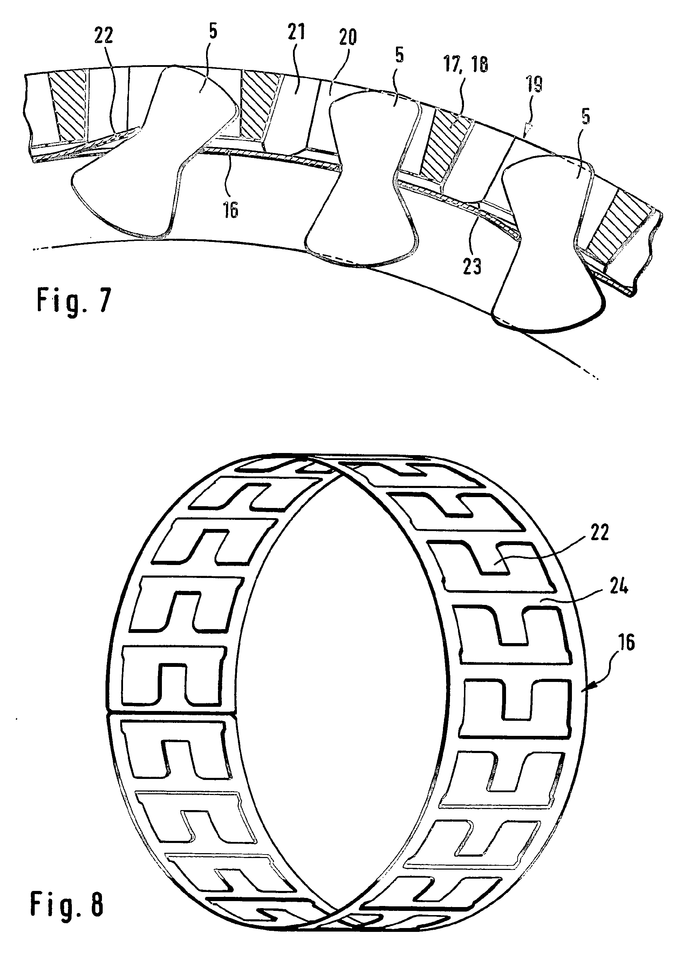

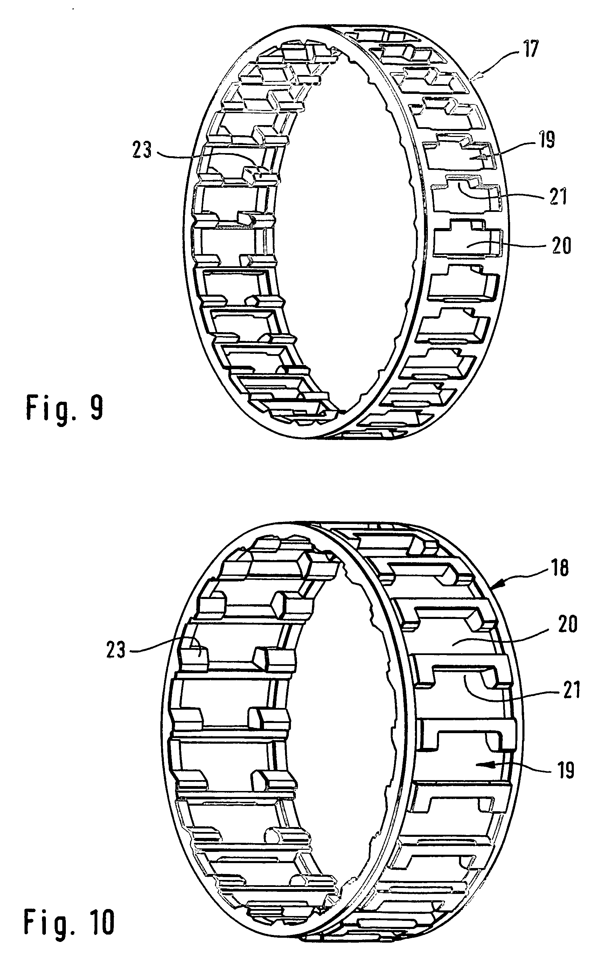

Bei dem in den Figuren 7 bis 10 dargestellten Gesamtfreilaufkonzept kann die Klemmkörpergeometrie vollkommen frei und dadurch absolut funktionsoptimiert gestaltet werden. Es ist allein eine exakt definierte Taillierung des Klemmkörpers 5 notwendig. Diese dient der eindeutigen Positionierung der Bandfeder 16 und des Klemmkörpers 5 im Käfig 17 bzw. 18. Sie ist auf die Montierbarkeit des Klemmkörpers 5 zwischen den Klemmbahnen ausgerichtet.

Als Käfigwerkstoff kann ein glasfaserverstärkter Kunststoff vorgesehen werden, wie er bei Wälzlagern im Automobilsektor bereits Stand der Technik ist. Dies hat den Vorteil geringer Materialkosten sowie einer günstigen und wirtschaftlichen Herstellung in großen Stückzahlen aus einem Spritzwerkzeug. Die recht hohen Kosten für ein derartiges Werkzeug amortisieren sich im Automobilbau üblicherweise über die Stückzahl und die Laufzeit. Kunststoff überzeugt außerdem durch seine geringe Masse und die damit verbundene niedrige Massenträgheit. Glasfaseranteile erhöhen die Festigkeit und die Verschleißwiderstandsfähigkeit. Moderne Kunststoffe weisen eine Temperaturbeständigkeit von bis zu 200°C und eine sehr gute chemische Verträglichkeit mit gängigen Automobilölen auf. Ein geringer Reibwert zu Stahl bewirkt ein positives Verschleiß- und Reibverhalten zu Klemmkörpern, Feder und Klemmbahnen.

Der Käfig 17 bzw. 18 weist radial gesehen T-förmig ausgebildete Aussparungen auf. Diese sogenannten Käfigtaschen 19 sind gleichmäßig in Umfangsrichtung verteilt und haben jeweils zwei Teilbereiche. Der Teilbereich mit der größeren rechteckigen Aussparung 20 dient der Aufnahme der Klemmkörper 5 sowie deren symmetrischer Verteilung in Umfangsrichtung. Hier wird ein Klemmkörper 5 jeweils achsparallel und axial geführt. Er ist so ausgebildet, dass seine freie Bewegung immer möglich ist. Der Teilbereich der kleineren rechteckigen Aussparung 21 erlaubt eine ungehinderte und kollisionsfreie Bewegung der starren Federzunge 22.

Anlageschrägen 23 am Käfiginnendurchmesser bilden für jeden einzelnen Klemmkörper einen formschlüssigen Endanschlag für die Bewegung der Klemmkörper 5 unter Fliehkrafteinfluss, wenn die Klemmkörper 5 den Kontakt zur inneren Klemmbahn, beispielsweise der Ktemmbahn am Innenring 1, verloren haben. Dadurch wird der Abhebeweg der Klemmkörper 5 begrenzt, so dass diese bei nachlassender Fliehkraft aufgrund der entgegenwirkenden Anfederungskraft möglichst schnell wieder in reibschlüssigen Kontakt mit der Islemmbahn des Innenrings 1 kommen. Der Federweg und damit verbundene Spannungen in der Bandfeder 16 sind dadurch ebenfalls begrenzt.

Die radiale Führung des leicht nach außen vorgespannten Federbandes 16 erfolgt am Käfig 17 bzw. 18 an dessen innerer Oberfläche mit dem kleinsten Durchmesser. Gleichzeitig verhindert diese Fläche eine Aufweitung des offenen Federbandes unter Fliehkrafteinfluss, da dessen Stoßenden nicht miteinander verbunden sind. Käfigborde verhindern ein axiales Herausragen des Federbandes 16 aus dem Käfig 17 bzw. 18 sowie den axialen Kontakt von Klemmkörpern 5 und auf den Käfig aufgesteckten Gleitscheiben, wenn solche vorhanden sein müssen.

Der gesamte Käfig ist außen geführt, d.h. das Spiel zwischen Käfigaußendurchmesser und der Außenklemmbahn, also der inneren Oberfläche des Außenringes 2, ist unter Berücksichtigung der unterschiedlichen Temperaturausdehnungen möglichst gering ausgebildet. Dadurch kann die Radialkomponente der auf den Klemmkörper 5 einwirkenden Fliehkraft im Idealfall jeweils durch den Käfig direkt an die Außenklemmbahn weitergeleitet werden. So wird der Käfig entlastet. Die auf diese Weise unter der Fliehkraft erhöhte Reibung zwischen dem Käfig und der Außenklemmbahn begünstigt das Mitdrehen von Klemmkörpern und Käfig mit der Drehzahl der Außenklemmbahn.

Falls die Notwendigkeit besteht, eine oder zwei Gleitscheiben anzubringen, können am Käfig in Umfangsrichtung ein- oder beidseitig umlaufende Nuten ausgebildet werden. Diese ermöglichen dann eine verdrehfreie und gleichzeitig transportsichere Aufnahme axial aufgeschnappter Gleitscheiben. Das Aufschnappen wird über partielle Sicken an den Gleitscheiben durchgeführt. Die Außenführung des Käfigs geschieht über radiale Erhebungen am Käfigaußendurchmesser im Bereich der Käfigstege oberhalb der Anlageschrägen 23.

Die beschriebene Käfigkonstruktion weist eine symmetrische Geometrie auf. Die Klemmrichtung des Freilaufs kann über eine Kennzeichnung am Käfig oder eine Beschriftung an der Gleitscheibe angezeigt werden.

Die Bandfeder 16 besteht aus einem einteiligen, jeden einzelnen Klemmkörper individuell anfedernden Federstahlband. Die Geometrie ist einfach, eindimensional und linear gestaltet, ohne jegliche Art von Biegungen. Das einzig mögliche Setzverhalten ist das Aufweiten des Federbandes, was aber über die Führung am Käfiginnendurchmesser verhindert wird. Das Band kann als einfaches ausgestanztes oder lasergeschnittenes Teil hergestellt werden.

Das gesamte Federband ist einheitlich rolliert, einschließlich der Federzungen 22. Dadurch ergeben sich im Verbund gleichmäßige Anfederungseigenschaften für den ersten und letzten Klemmkörper sowie für alle dazwischen liegenden Klemmkörper. Das Federband ist mit leichter radialer Vorspannung in den Käfig eingelegt und wird durch diesen definiert konzentrisch positioniert.

Der freie Abstand der Federzunge 22 zum Federsteg 24, in welchem der Klemmkörper 5 transportsicher aufgenommen und achsparallel gehalten wird, muss mindestens der engsten Stelle am Klemmkörper (Taillierung) entsprechen. Nur so ist eine freie und ungestörte Bewegung des Klemmkörpers in der Federtasche gegeben, insbesondere wenn die starre Federzunge 22 jeweils durch ihre Null-Lage läuft, d.h. wenn die Richtung der Anfederungskraft von radial nach außen in radial nach innen oder umgekehrt wechselt.

Dieser freie Abstand liegt für den Transport des Freilaufs exakt in der Klemmkörpertaillierung, worauf der Käfiginnendurchmesser natürlich abgestimmt sein muss. So wird die Anfederung erst mit der Montage in die Anschlussteile wirksam. Die Art der Anfederung unterstützt zu Beginn der Drehmomentaufnahme den Reibschluss der Klemmkörper mit den Klemmbahnen und gleichzeitig die aus dem Drehmoment resultierende Einrollbewegung der Klemmkörper. Im Verlauf des Drehmomentaufbaus ändert die Anfederungskraft beim Durchgang durch die Null-Lage ihre Richtung. Danach begünstigt sie das Lösen des Klemmkörpers, wenn das Drehmoment wieder abfällt. So wirkt diese Ausführung der Anfederung der Klemmkörpermassenträgheit bei hohen Belastungsfrequenzen entgegen.

Die auf Biegung beanspruchte Federzunge 22 ist im Verhältnis zu dem auf Torsion belasteten Federsteg 24 dermaßen steif, dass die Federwirkung allein aus der Torsion der Federstege 24 resultiert. Federzunge und Federbord erfahren aufgrund der Anfederung keinerlei elastische Verformung. Daher muss der Käfig im Bereich der Federstege 24 freigestellt sein.

### Bezugszahlenliste

- 1: Innenring
- 2: Außenring
- 3: I<äfig
- 4: Bandfeder
- 5: Klemmkörper
- 6: Tasche
- 7: Federzunge
- 8: Begrenzungswand
- 9: Käfig
- 10: Verstärkungsleiste
- 11: Käfig
- 12: Begrenzungswand
- 13: Freistellung
- 14: Federzunge
- 15: Bandfeder
- 16: Bandfeder
- 17: Käfig
- 18: Käfig
- 19: Käfigtasche
- 20: größere Aussparung
- 21: kleinere Aussparung
- 22: Federzunge
- 23: Anlageschräge
- 24: Federsteg
- F: Kraft
- F_{R}: Radialkomponente
- F_{U}: Umfangskomponente
- R: Radius

## Patentansprüche

1. Freilaufkupplung mit Klemmkörpern (5), welche zwischen einem kreiszylindrischen Innenring (1) und einem dazu konzentrischen Außenring (2) in Umfangsrichtung hintereinander angeordnet, in Taschen (6, 19) eines Käfigs (3, 9, 11, 17, 18) geführt und von einer an dem Käfig (3, 9, 11, 17, 18) radial anliegenden Bandfeder (4, 15, 16) mit Federzungen (7, 14, 22) beaufschlagt sind, wobei jeweils innerhalb einer der Taschen (6, 19) zur Aufnahme eines Klemmkörpers (5) eine Begrenzungswand (8, 12, 23) ausgebildet ist, welche eine Anlage des Klemmkörpers (5) an dem Käfig (3, 9, 11, 17, 18) ermöglicht, und wobei an dem Käfig (3, 9, 11, 17, 18) jeweils in dem die Begrenzungswand (8, 23) aufweisenden radialen Bereich eine Verstärkungsleiste (10) einstückig an der äußeren Käfigoberfläche angeformt ist, **dadurch gekennzeichnet, dass** die Klemmkörper (5) derart angefedert sind, dass zu Beginn der Drehmomentaufnahme der Reibschluss der Klemmkörper (5) mit den Klemmbahnen und gleichzeitig die aus dem Drehmoment resultierende Einrollbewegung der Klemmkörper unterstützt wird und im Verlauf des Drehmomentaufbaus die Anfederungskraft beim Durchgang durch die Null-Lage ihre Richtung ändert.

2. Freilaufkupplung nach Anspruch 1, **dadurch gekennzeichnet, dass** die Begrenzungswand (8) eine von der inneren Oberfläche des Käfigs (3, 9) ausgehende Fase ist.

3. Freilaufkupplung nach Anspruch 1, **dadurch gekennzeichnet, dass** die Begrenzungswand (12) ein von der inneren Oberfläche des Käfigs (11) ausgehender konvex gewölbter Flächenabschnitt ist.

4. Freilaufkupplung nach Anspruch 1, **dadurch gekennzeichnet, dass** die Begrenzungswand (12) jeweils innerhalb einer von der Tasche (6) ausgehenden Freistellung (13) angeordnet ist, deren Axialmaß der axialen Länge der Federzunge (14) entspricht.

## Claims

1. Overrunning clutch comprising clamping elements (5) that are arranged behind one another in peripheral direction between a circular cylindrical inner ring (1) and a concentric outer ring (2), said clamping elements (5) being guided in pockets (6, 19) of a cage (3, 9, 11, 17, 18) while being loaded by a band spring (4, 15, 16) that bears radially against the cage (3, 9, 11, 17, 18) and has spring tongues (7, 14, 22), a limiting wall (8, 12, 23) being configured in each pocket (6, 19) for receiving a clamping element (5), said limiting wall enabling a support of the clamping element (5) on the cage (3, 9, 11, 17, 18), a reinforcing ledge (10) being formed integrally on an outer surface of the cage in every radial region of the cage (3, 9, 11, 17, 18) comprising the limiting wall (10), **characterised in that** the clamping elements (5) are suspended in such a way that, at the beginning of torque take-up, the friction-locking of the clamping elements (5) with the clamping tracks and, at the same time, the rolling-in movement of the clamping elements resulting from the torque is assisted and, in the course of torque build-up, the suspension force changes its direction when passing through the zero position.

2. Overrunning clutch according to claim 1, **characterised in that** the limiting wall (8) is a bevel starting from an inner surface of the cage (3, 9).

3. Overrunning clutch of claim 1, **characterised in that** the limiting wall (12) is a convexly arched surface portion starting from an inner surface of the cage (11).

4. Overrunning clutch of claim 1, **characterised in that** the limiting wall (12) is arranged within a clearance in every pocket (6), an axial dimension of the clearance (13) corresponding to an axial length of the spring tongue (14).

## Revendications

1. Embrayage à roue libre comprenant des corps de serrage (5) qui sont agencés, l'un derrière l'autre en direction périphérique, entre un anneau intérieur (1) de forme cylindrique circulaire et un anneau extérieur (2) concentrique à l'anneau intérieur (1), lesdits corps de serrage (5) étant guidés dans des poches (6, 19) d'une cage (3, 9, 11, 17, 18) en étant mis sous charge par un ressort à ruban (4, 15, 16) qui s'appuie radialement sur la cage (3, 9, 11, 17, 18) et comprend des languettes (7, 14, 22) de ressorts, une paroi de limitation (8, 12, 23) étant configurée, à chaque fois, dans les poches (6, 19) pour la réception d'un des corps de serrage (5) et pour permettre l'appui des corps de serrage (5) sur la cage (3, 9, 11, 17, 18), et une baguette de renforcement (10) étant formée d'un seul tenant avec la surface extérieure de la cage, à chaque fois, dans la région radiale de la cage (3, 9, 11, 17, 18) qui comprend la paroi de limitation (8, 23), **caractérisé en ce que** les corps de serrage (5) sont suspendus de telle façon que, au commencement du support du couple, l'engagement par frottement entre les corps de serrage (5) et les pistes de serrage et, en même temps, le mouvement d'enroulement des corps de serrage qui s'ensuit du couple de torsion, sont assistés, et au cours de l'augmentation du couple de torsion, la force de suspension change sa direction en passant par la position zéro.

2. Embrayage à roue libre selon la revendication 1, **caractérisé en ce que** la paroi de limitation (8) est un chanfrein qui s'étend à partir de la surface intérieure de la cage (3, 9).

3. Embrayage à roue libre selon la revendication 1, **caractérisé en ce que** la paroi de limitation (12) est une partie superficielle de forme convexe voûtée qui s'étend à partir de la surface intérieure de la cage (11).

4. Embrayage à roue libre selon la revendication 1, **caractérisé en ce que** la paroi de limitation (12) est agencée, à chaque fois, dans un évidement (13) de la poche (6), et l'étendue axiale de cet évidement correspond à la longueur de la languette (14) de ressort.
